# EUROPÄISCHE PATENTSCHRIFT

(11) **EP 2 841 857 B1**
(45) Veröffentlichungstag und Bekanntmachung des Hinweises auf die Patenterteilung: **21.09.2016**
(21) Anmeldenummer: 13714963.9
(22) Anmeldetag: 11.04.2013
(51) Int. Cl.: F25D 11/02, F25D 29/00

(54) **EINKREIS-KÄLTEGERÄT**
SINGLE-CIRCUIT REFRIGERATOR
APPAREIL FRIGORIFIQUE À UN SEUL CIRCUIT

(30) Priorität: 25.04.2012 DE 102012206828
(43) Veröffentlichungstag der Anmeldung: 04.03.2015
(73) Patentinhaber: BSH Hausgeräte GmbH, 81739 München (DE)
(72) Erfinder: IHLE, Hans, 89537 Giengen (DE); NUIDING, Wolfgang, 89537 Giengen (DE)
(86) Internationale Anmeldenummer: PCT/EP2013/057531
(87) Internationale Veröffentlichungsnummer: WO 2013/160109

(56) Entgegenhaltungen:
- EP-A2- 0 392 521
- WO-A1-02/052209
- WO-A2-2010/133506
- WO-A2-2011/154388
- DE-A1- 19 718 609
- US-A- 4 481 787
- US-A- 6 138 465

## Beschreibung

Die vorliegende Erfindung betrifft ein Kältegerät, insbesondere ein Haushaltskältegerät, mit wenigstens zwei Temperaturzonen, die durch in Reihe verbundene Verdampfer gekühlt sind.

Bei einem solchen sogenannten Einkreis-Kältegerät kann das Kältemittel entweder nur durch beide in Reihe verbundene Verdampfer gleichzeitig oder durch keinen von beiden zirkulieren. Es besteht daher die Gefahr, dass wenn der Verdichter in herkömmlicher Weise anhand des Kältebedarfs nur von einer der beiden Temperaturzonen gesteuert wird, sich in der anderen eine unerwünscht hohe oder niedrige Temperatur einstellt. In der Praxis wirkt sich dieses Problem nur dann nicht aus, wenn der Kältebedarf der beiden Temperaturzonen exakt proportional ist und die Leistungsfähigkeit der Verdampfer auf das Proportionsverhältnis abgestimmt ist. Da die wärmere der beiden Temperaturzonen im Allgemeinen den geringeren spezifischen Wärmebedarf aufweist, bekommt sie als Ergebnis der Abstimmung auch einen leistungsschwachen Verdampfer, mit der Folge, dass lange Betriebszeiten des Verdichters erforderlich sind, um eine Solltemperatur aufrechtzuerhalten.

Ein weiteres Problem ist, dass das Proportionsverhältnis zwischen dem Kältebedarf der warmen und der kalten Temperaturzone variieren kann: ist die Temperatur der Umgebung, in der das Kältegerät aufgestellt ist, niedriger als die, für die die Leistung der Verdampfer optimiert ist, dann nimmt der Kältebedarf der wärmeren Temperaturzone stärker ab als der der kälteren. Wenn die Steuerung des Verdichters anhand des Kältebedarfs der wärmeren Temperaturzone erfolgt, dann ist eine unzureichende Kühlung der kälteren die Folge. Ein herkömmliches Mittel, um diesem Problem abzuhelfen, ist unter der Bezeichnung "Winterschaltung" bekannt: Eine Innenbeleuchtung der wärmeren Temperaturzone wird als Wärmequelle benutzt, die betrieben wird, um den Kältebedarf der wärmeren Temperaturzone künstlich soweit zu erhöhen, dass die Verdichterlaufzeit auch für eine ausreichende Kühlung der kälteren Temperaturzone ausreicht. Es liegt auf der Hand, dass eine solche Winterschaltung den Wirkungsgrad des Kältegeräts empfindlich beeinträchtigt. Hinzu kommt, dass die zur Innenbeleuchtung von Haushaltskältegeräten zunehmend verwendeten LEDs im Vergleich zu herkömmlichen Glühlampen eine erheblich höhere Lichtausbeute aufweisen, so dass ihre Wärmeleistung für eine wirksame Winterschaltung nicht mehr ausreicht. Zwar könnte der Wärmebedarf durch eine zusätzliche Widerstandsheizung gedeckt werden, doch ist zum einen der Einbau einer solchen zusätzlichen Komponente kostspielig, und zum anderen wird der Verbrauchsvorteil der effizienten LED-Beleuchtung zunichte gemacht.

Aus EP 0 392 521 A2 ist ein Kühlgerät nach dem Oberbegriff des Anspruchs 1 bekannt, bei dem ein Temperatursensor die Temperatur in der Umgebung des Kältegeräts überwacht und bei niedriger Umgebungstemperatur den Verdichter einschaltet, wenn seit dem letztmaligen Betrieb des Verdichters eine vorgegebene Wartezeit verstrichen ist.

Eine Aufgabe der vorliegenden Erfindung ist, ein Einkreis-Kältegerät anzugeben, das es ohne eine aufwendige Optimierung erlaubt, Solltemperaturen in zwei verschiedenen Temperaturzonen aufrechtzuerhalten. Eine weitere Aufgabe ist, ein Einkreis-Kältegerät zu schaffen, das es durch Verwendung eines großformatigen, leistungsfähigen Verdampfers auch in einer Temperaturzone mit geringem spezifischem Kältebedarf erlaubt, die Verdichterlaufzeiten zu verkürzen, ohne dass dies eine unzureichende Kühlung der Temperaturzone mit höherem spezifischem Kältebedarf zur Folge hat.

Die Aufgaben werden zum einen gelöst durch ein Kältegerät mit den Merkmalen des Anspruchs 1.

Indem die zweite Ausschaltbedingung so gewählt ist, dass mit ihrem Eintritt früher zu rechnen ist als mit dem Eintritt der ersten Ausschaltbedingung, kann die Laufzeit des Verdichters, wenn er aufgrund von Überschreitung der maximalen Wartezeit eingeschaltet worden ist, kürzer gemacht werden als bei einem Einschalten aufgrund der Überschreitung der Einschalttemperatur, mit der erwünschten Folge, dass in diesem Falle die durch den Verdichterbetrieb erzielte Kühlwirkung der vom stromaufwärtigen Verdampfer gekühlten Temperaturzone stärker zugute kommt als der stromabwärtigen.

Die Wartezeit kann ab dem Einschalten oder ab dem Ausschalten des Verdichters definiert sein.

Wenn das Kältegerät bei einer üblichen Umgebungstemperatur im Einsatz ist, dann ist davon auszugehen, dass der Verdichter in bestimmten, nicht zu großen Zeitabständen jeweils in Betrieb geht, um eine übermäßige Erwärmung der von dem ersten Temperaturfühler überwachten Temperaturzone zu verhindern. Geschieht dies nicht, dann kann davon ausgegangen werden, dass das Kältegerät sich in einer extrem kalten Umgebung befindet, und dass ein Verdichterbetrieb erforderlich ist, um eine übermäßige Erwärmung der nicht unmittelbar von dem ersten Temperaturfühler überwachten Temperaturzone zu verhindern.

Die vorgegebene Wartezeit kann abhängig davon festgelegt werden, ob die erste oder die zweite Ausschaltbedingung zum Ausschalten des Verdichters geführt hat. Dabei ist die Wartezeit im Falle der zweiten Ausschaltbedingung kürzer ist als im Falle des ersten. So kann auch dann, wenn die von dem ersten Temperaturfühler überwachte Temperaturzone über lange Zeit hinweg keine Kühlung braucht, die andere Temperaturzone, wenn nötig, intensiv gekühlt werden.

Wenigstens eine der Ausschaltbedingungen kann das Verstreichen einer vorgegebenen Zeitspanne seit dem Einschalten des Verdichters sein.

Wenn beide Ausschaltbedingungen das Verstreichen einer vorgegebenen Zeitspanne seit dem Einschalten des Verdichters sind, ist die vorgegebene Zeitspanne im Falle der zweiten Ausschaltbedingung vorzugsweise kürzer als im Falle der ersten Ausschaltbedingung.

Als erste Ausschaltbedingung kommt auch das Unterschreiten einer Ausschalttemperatur am ersten Temperaturfühler in Betracht.

Wenn die zweite Ausschaltbedingung als Verstreichen einer vorgegebenen Zeitspanne seit Einschalten des Verdichters definiert ist, dann ist diese vorgegebene Zeitspanne vorzugsweise in etwa so lang wie die Zeit, die der Verdichter zum Austausch des Kältemittels im stromaufwärtigen der beiden Verdampfer benötigt. In dieser Zeit füllt der Verdichter den stromaufwärten Verdampfer mit flüssigem Kältemittel auf, ohne dass eine nennenswerte Menge dieses flüssigen Kältemittels in den stromabwärtigen Verdampfer gelangt. Damit die Kühlwirkung des Verdampferbetriebs fast ausschließlich der vom stromaufwärtigen Verdampfer gekühlten Temperaturzone zugute kommt, sollte die vorgegebene Zeitspanne deutlich kürzer als die zum Austausch des Kältemittels in beiden Verdampfern benötigte Zeit und insbesondere nicht länger als das Eineinhalbfache der zum Austausch des Kältemittels im stromaufwärtigen Verdampfer benötigten Zeit sein. Andererseits sollte sie auch nicht wesentlich kürzer als die zum Austausch des Kältemittels im stromaufwärtigen Verdampfer benötigte Zeit, insbesondere nicht kürzer als die Hälfte dieser Zeit sein, da zu kurze Laufzeiten des Verdichters die Effizienz des Kältegeräts beeinträchtigen.

Wenn an einem der Verdampfer ein zweiter Temperaturfühler angeordnet ist, kann als zweite Ausschaltbedingung auch eine Temperaturabnahme oder die Unterschreitung einer Grenztemperatur an dem zweiten Temperaturfühler festgetegt sein. Diese Temperaturabnahme oder Grenztemperatur sollte so gewählt sein, dass sie nur unter dem Einfluss von flüssigem Kältemittel auf den zweiten Temperaturfühler beobachtbar ist.

Dieser zweite Temperaturfühler ist vorzugsweise am stromabwärtigen Verdampfer, besonders bevorzugt in einer stromaufwärtigen Region des stromabwärtigen Verdampfers, angeordnet, um am stromabwärtigen Verdampfer nach Einschalten des Verdichters eintreffendes flüssiges Kältemittel frühzeitig erfassen und ggf. daraufhin ein Ausschalten des Verdichters auslösen zu können.

Weitere Merkmale und Vorteile der Erfindung ergeben sich aus der nachfolgende Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: eine schematische Darstellung eines erfindungsgemäßen Kältegeräts;
- Fig. 2: eine Variante des Kältegeräts in einer zu Fig. 1 analogen Ansicht;
- Fig. 3: ein Flussdiagramm eines ersten Arbeitsverfahrens der Steuerschaltung des Kältegeräts aus Fig. 1 oder 2;
- Fig. 4: typische zeitliche Entwicklungen der vom Verdampfer-Temperaturfühler des Kältegeräts aus Fig. 1 oder 2 erfassten Temperatur; und
- Fig. 5: ein Flussdiagramm eines zweiten Arbeitsverfahrens der Steuerschaltung.

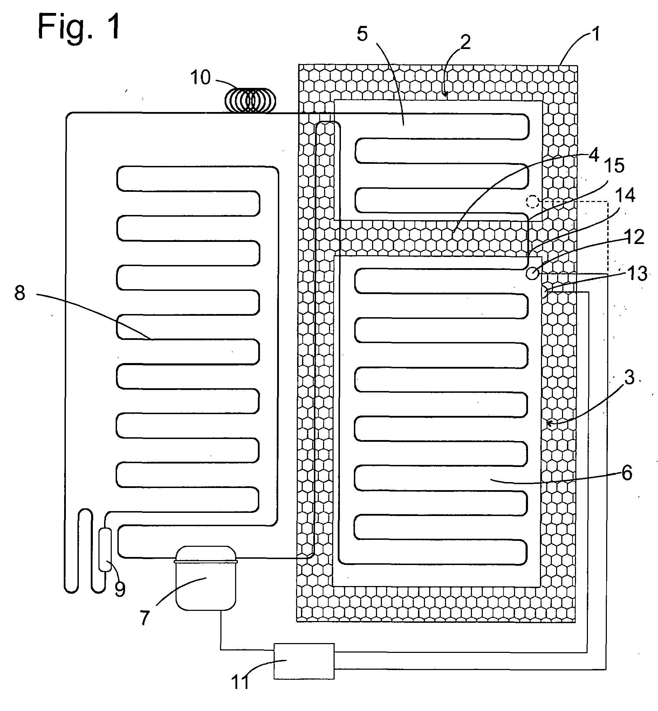

Fig. 1 zeigt schematisch ein Einkreis-Haushaltskältegerät mit einem wärmeisolierenden Gehäuse 1, dessen Innenraum in zwei Temperaturzonen, hier ein Gefrierfach 2 und ein Normalkühlfach 3, unterteilt ist. Die Unterteilung ist hier eine Wand 4, die wie die die Fächer 2, 3 umgebenden Wände des Gehäuses 1 mit Isoliermaterial ausgefüllt ist; die zwei Temperaturzonen könnten aber auch in einem zusammenhängenden Innenraum des Gehäuses 1 gebildet oder lediglich durch eine den Luftaustausch zwischen ihnen behindernde Wandung getrennt sein.

Beiden Temperaturzonen, Gefrierfach 2 und Normalkühlfach 3, ist jeweils ein Verdampfer 5 bzw. 6 zugeordnet. Vorzugsweise sind die Verdampfer 5, 6 als Coldwall-Verdampfer ausgebildet, es kommen aber auch andere Verdampfertypen in Betracht. Die Verdampfer 5, 6 können auf getrennten Platinen oder auch auf einer einzigen, die Wand 4 überbrückend sich über beide Fächer 2, 3 erstreckenden Platine gebildet sein.

Die Verdampfer 5, 6 sind Teil eines Kältemittelkreislaufs, der ferner in an sich bekannter Weise einen Verdichter 7, einen z.B. an einer Rückwand des Gehäuses 1 angebrachten Verflüssiger 8, einen Trockner 9 und eine Kapillare 10 umfasst. Kältemittel, das im Verdichter 7 verdichtet und erwärmt worden ist, gibt seine Wärme am Verflüssiger 8 ab und kondensiert dabei. Das flüssige Kältemittel entspannt sich beim Durchgang durch die Kapillare 10 und erreicht von dort zunächst den Verdampfer 5 des Gefrierfachs 2, wo es unter niedrigem Druck verdampfen kann. Der Verdampfer 6 schließt stromabwärts an den Verdampfer 5 an, und sein Ausgang ist mit einem Sauganschluss des Verdichters 7 verbunden.

Eine Steuerschaltung 11 dient zum Ein- und Ausschalten des Verdichters anhand von Temperaturmesswerten, die von einem Verdampfer-Temperaturfühler 12 und einem Luft-Temperaturfühler 13 geliefert werden. Der Verdampfer-Temperaturfühler 12 ist in engem thermischem Kontakt mit einem der Verdampfer 5, 6 montiert. Fig. 1 zeigt den Verdampfer-Temperaturfühler 12 als durchgezogenen Umriss auf dem Verdampfer 6 des Normalkühlfachs 3 benachbart zu einem Kältemitteleinlass 14 des Verdampfers 6. Alternativ hierzu könnte der Verdampfer-Temperaturfühler 12 auch auf dem Verdampfer 5 des Gefrierfachs 2 benachbart zu einem Kältemittelauslass 15 desselben angeordnet sein, oder auch an einem beliebigen zwischen dem Auslass 15 und dem Einlass 14 liegenden Abschnitt der Kältemittelleitung. Die Anbringung am Verdampfer 6 ist bevorzugt, da der Verdampfer-Temperaturfühler 12 hier auch zum Erfassen einer Vereisung dienen bzw. der Steuerschaltung 11 eine Entscheidung ermöglichen kann, ob ein Abtauen des Verdampfers 6 nötig ist.

Der Messwert des Luft-Temperaturfühlers 13 soll möglichst genau die Lufttemperatur im Normalkühlfach 3 wiedergeben. Zu diesem Zweck ist der Luft-Temperaturfühler 13 in einer Wand des Gehäuses 1 zwischen deren Isolationsmaterialfüllung und einem das Normalkühlfach 3 begrenzenden Innenbehälter entfernt vom Verdampfer 6 angeordnet.

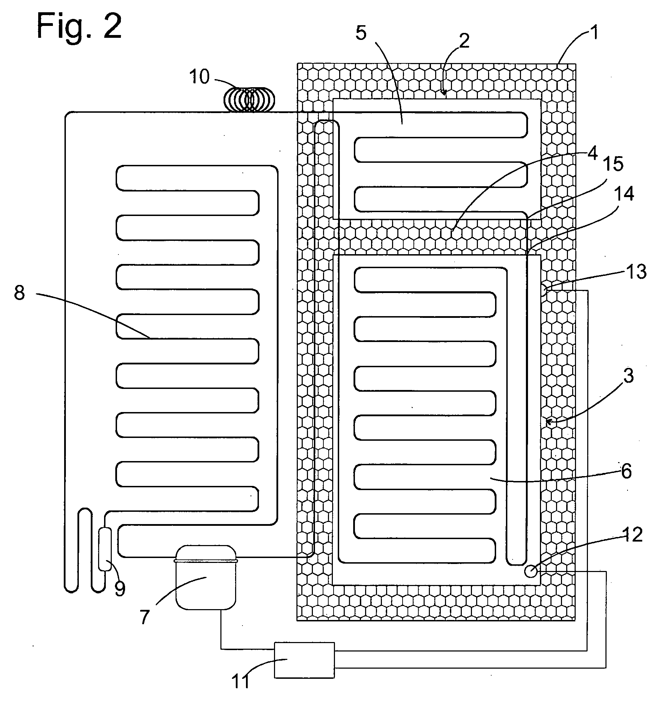

Fig. 2 zeigt eine Variante des Kältegeräts, die sich von der Ausgestaltung der Fig. 1 lediglich durch den Verlauf der Kältemittelleitung auf dem Verdampfer 6 unterscheidet. Vom Kältemitteleinlass 14 verläuft sie zunächst auf direktem Weg abwärts bis in eine untere Ecke des Verdampfers 6, in der auch der Verdampfer-Temperaturfühler 12 angebracht ist, um sich anschließend in Mäandern über die Fläche des Verdampfers 6 auszubreiten. So ist der Temperaturfühler 12 zwar auf gerader Linie weit vom Kältemitteleinlass 14 entfernt, gleichzeitig aber dennoch an einem stromaufwärtigen Bereich des Verdampfers 6 angeordnet, um eine Abkühlung durch in den Verdampfer 6 eindringendes flüssiges Kältemittel mit geringer Verzögerung zu erfassen. Gleichzeitig ist der Temperaturfühler 12 dank der Anbringung im unteren Bereich des Verdampfers 6 gut geeignet, um während eines Abtauvorgangs zuverlässige Information über den Resteisbestand zu liefern, da sich dieser beim Abtauen am unteren Rand des Verdampfers 6 sammelt.

Eine Solltemperatur des Normalkühlfachs ist vom Benutzer einstellbar und beträgt typischerweise um die 4°C, und auf diesem Wert oder geringfügig darüber liegt auch die vom Verdampfer-Temperaturfühler 12 erfasste Temperatur Tv am Ende einer Ruhephase des Verdichters 7. Die Temperatur des Gefrierfachs 2 und seines Verdampfers 5 sollte bei normaler Funktion des Geräts zur gleichen Zeit deutlich tiefer, z. B. bei -18°C, liegen.

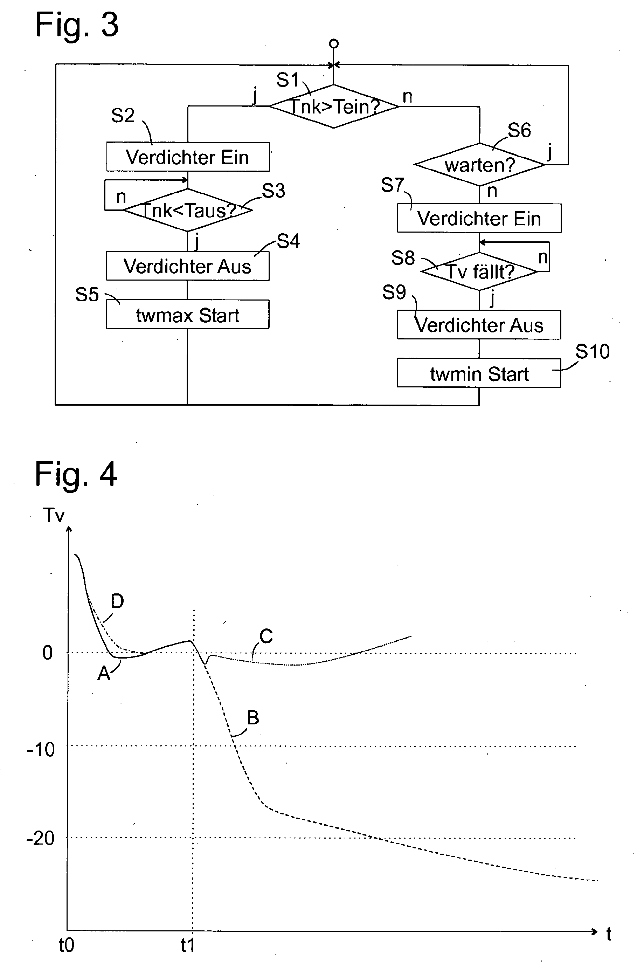

Fig. 3 zeigt ein Flussdiagramm eines ersten Arbeitsverfahrens der Steuerschaltung 11. Die Beschreibung des Verfahrens setzt an einem Zeitpunkt ein, an dem der Verdichter 7 ausgeschaltet ist. In Schritt S1 vergleicht die Steuerschaltung 11 die vom Temperatursensor 13 gemeldete Temperatur Tnk des Normalkühlfachs 3 mit einer Einschalttemperatur Tein. Diese Einschalttemperatur Tein ist abhängig von der vom Benutzer gewählten Solltemperatur. Wenn die Einschalttemperatur Tein überschritten ist, schaltet die Steuerschaltung 11 in an sich üblicher Weise den Verdichter 7 in Schritt S2 ein, und wartet in Schritt S3 den Eintritt einer Ausschaltbedingung ab. Die Ausschaltbedingung kann z.B., wie in Fig. 3 dargestellt, das Absinken der Temperatur Tnk unter eine Ausschalttemperatur Taus sein, die etwas unterhalb der eingestellten Solltemperatur liegt. Alternativ kann als Ausschaltbedingung auch das Verstreichen einer vorgegebenen maximalen Verdichterlaufzeit seit dem Einschaltschritt S2 herangezogen werden.

Mit Eintritt der Ausschaltbedingung wird der Verdichter in Schritt S4 ausgeschaltet, und bevor das Verfahren zum Ausgangspunkt S1 zurückkehrt, wird in Schritt S5 ein Zeitgeber gestartet, um den Ablauf eines Zeitintervall der Dauer twmax zu überwachen.

Wenn in Schritt S1 festgestellt wird, dass die Einschalttemperatur Tein nicht überschritten ist, verzweigt das Verfahren nach Schritt S6, wo überprüft wird, ob die mit dem letzten Ausschalten S4 des Verdichters begonnene Wartezeit twmax abgelaufen ist. Wenn diese Wartezeit nicht abgelaufen ist, kehrt das Verfahren zum Ausgangspunkt S1 zurück. Anderenfalls wird der Verdichter in Schritt S7 eingeschaltet, und die Steuerschaltung 11 wartet in Schritt S8 auf den Eintritt einer Ausschaltbedingung.

Wenn die Steuerschaltung 11 in S7 den Verdichter 7 einschaltet, nimmt der Druck in den Verdampfern 5, 6 ab, im kalten Verdampfer 5 noch vorhandenes flüssiges Kältemittel beginnt zu verdampfen und kühlt sich dabei ab. Der entstehende Dampf wird vom Verdichter 7 über den Verdampfer 6 abgesaugt und kühlt diesen. Der auf dem Verdampfer 6 gelegene Temperaturfühler 12 beginnt daher kurze Zeit nach Einschalten des Verdichters zum Zeitpunkt t0, eine erste Abkühlung zu registrieren, wie in Fig. 4 als durchgezogene Kurve A dargestellt. Ein darauf folgender schwacher Temperaturanstieg ist darauf zurückzuführen, dass im Verflüssiger 8 erst durch Druckaufbau und gleichzeitige Wärmeabgabe Kältemittel von neuem verflüssigt werden muss, bevor der Kapillare 10 flüssiges Kältemittel zugeführt werden kann, um dieses dann in den Verdampfern zu verdampfen. Dieses neu verflüssigte Kältemittel breitet sich nach Passieren der Kapillare 10 allmählich im Verdampfer 5 aus. Nach einer gewissen Zeit erreicht es auch den Verdampfer 6 und bewirkt auch dort eine stärkere Abkühlung als zuvor das aus dem Verdampfer 5 abgesaugte gasförmige Kältemittel. Dies führt ab dem Zeitpunkt t1, typischerweise mehrere Minuten nach dem Start des Verdichters 7, zu einer weiteren Absenkung der Temperatur Tv.

Wenn der Verdichter 7 zu diesem Zeitpunkt eingeschaltet bliebe, wie in den Verfahrensschritten S2 bis S4 der Fall, dann würde sich, wie durch den grob gestrichelten Kurvenverlauf B in Fig. 4 dargestellt, der schnelle Temperaturabfall noch etwa 5 Minuten lang bis zu einem Wert von ca. -17°C fortsetzen und dann allmählich gegen einen stationären Wert von ca. -25°C bis -30°C konvergieren. Indem jedoch erfindungsgemäß in Schritt S8 der Temperaturabfall ab dem Zeitpunkt t1 als Ausschaltbedingung gewertet wird, ergibt sich der als punktierte Kurve C dargestellte Temperaturverlauf: nach Ausschalten des Verdichters in Schritt S9 setzt sich die Temperaturabnahme noch für kurze Zeit fort, da das bereits in den Verdampfer 6 gelangte flüssige Kältemittel den Temperaturfühler 12 zunächst noch weiter abkühlt. Nach kurzer Zeit kommt dieses Verdampfen zum Erliegen, sodass die Temperatur Tv wieder zu steigen beginnt.

Alternativ könnte als Ausschaltbedingung in Schritt S8 auch der Ablauf einer vorgegebenen Zeitspanne seit dem Einschalten S7 des Verdichters herangezogen werden. Da die Fördermenge des Verdichters 7 und das Volumen des Gefrierfachverdampfers 5 bekannt ist, kann diese Zeitspanne zweckmäßigerweise so gewählt werden, dass sie soeben ausreicht, um das Kältemittel im Gefrierfachverdampfer 5 zu ersetzen, dass aber in der laufenden Betriebsphase des Verdichters 7 verdichtetes Kältemittel nicht in nennenswertem Umfang bis in den Verdampfer 6 des Normalkühlfachs 3 gelangt. So kann auch ohne eine Messung der Verdampfertemperatur Tv sichergestellt werden, dass das Gefrierfach 2 wirksam gekühlt wird, das Normalkühlfach 3 aber allenfalls in vernachlässigbarem Umfang.

In Schritt S10 wird wieder eine Wartezeit gestartet, bevor das Verfahren zum Ausgangspunkt zurückkehrt. Diese Wartezeit twmin kann kürzer sein als die in Schritt S5 gestartete Wartezeit twmax, um ein erneutes Kühlen des Gefrierfachs 2 bereits nach kurzer Zeit zu ermöglichen.

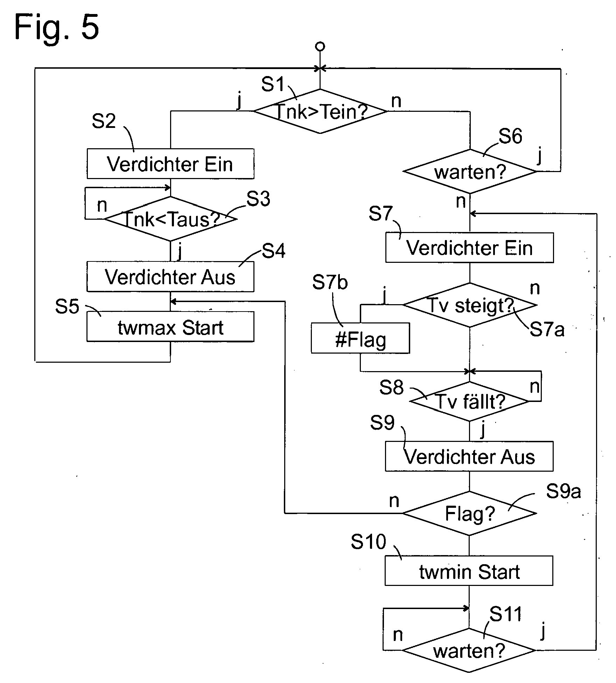

Fig. 5 zeigt ein Flussdiagramm eines Arbeitsverfahrens der Steuerschaltung 11 gemäß einer zweiten Ausgestaltung der Erfindung. Die Schritte S1 bis S7 dieses Verfahrens sind identisch mit denen der Fig. 3 und werden nicht erneut erläutert. Wenn der Verdichter in Schritt S7 eingeschaltet worden ist, überwacht auch hier die Steuerschaltung 11 die Verdampfertemperatur Tv, allerdings wertet sie zunächst in Schritt S7a die Messdaten des Temperaturfühlers 12 darauf aus, ob der in Fig. 4 im Verlauf der Kurve A dargestellte Temperaturanstieg vor dem Zeitpunkt t1 beobachtbar ist. Wenn dies nicht der Fall ist, oder wenn der Anstieg schwächer ist als erwartet, wie etwa durch die strichpunktierte Kurve D in Fig. 4 dargestellt, dann ist dies ein Hinweis darauf, dass ungewöhnlich warmes Kältemittel aus dem Verdampfer 5 verdrängt wird, was auf eine zu hohe Temperatur des Gefrierfachs 2 hindeutet. In diesem Fall verzweigt das Verfahren zu Schritt S7b, um ein die zu hohe Gefrierfachtemperatur anzeigendes Flag zu setzen.

Die darauf folgenden Schritte S8, S9 sind wiederum identisch mit denen des Verfahrens von Fig. 3.

Nachdem in Schritt S9 der Verdichter wieder ausgeschaltet worden ist, wird in Schritt S9a das Flag abgefragt. Wenn es nicht gesetzt ist, kehrt das Verfahren über Schritt S5 zum Ausgang zurück, d.h. bevor Schritt S7 erneut ausgeführt werden kann, muss eine Wartezeit verstreichen, die genauso lang ist wie diejenige, die auf einen normalen, anhand der Temperatur des Normalkühlfachs 3 gesteuerten Verdichterlauf S2 bis S4 folgt. Ist hingegen das Flag gesetzt, dann wird in Schritt S10 eine Wartezeit twmin begonnen, die soeben ausreichend bemessen ist, um das Kältemittel, mit dem in den Schritten S7 bis S9 der Gefrierfachverdampfer 5 befüllt worden ist, verdampfen zu lassen, und nach Ablauf dieser Wartezeit twmin in Schritt S11 springt das Verfahren direkt zurück zu Schritt S7. So wechseln sich kurze Verdichterläufe, bei denen jeweils nur der Gefrierfachverdampfer 5 befüllt wird, und Stillstandsphasen der Dauer twmin in schneller Folge so lange ab, bis der Temperaturverlauf in Schritt S7a nicht mehr auf eine zu hohe Gefrierfachtemperatur schließen lässt.

Gemäß einer bevorzugten Ausführungsform der Erfindung ist die Steuerschaltung 11 derart ausgestaltet, dass das Einschalten des Verdichters nach einer vorgegebenen Wartezeit nur dann erfolgt, wenn die Temperatur am ersten Temperaturfühler 13 zwischen der Einschalttemperatur Tein und der Ausschalttemperatur Taus liegt.

## Patentansprüche

1. Kältegerät, insbesondere Haushaltskältegerät, mit wenigstens zwei unterschiedlichen, durch in Reihe mit einem Verdichter (7) verbundene Verdampfer (5, 6) gekühlten Temperaturzonen (2,3), einem an der vom stromabwärtigen Verdampfer (6) gekühlten Temperaturzone (3) angeordneten ersten Temperaturfühler (13) und einer Steuerschaltung (11), die mit dem Temperaturfühler (13) verbunden und eingerichtet ist, bei Überschreitung einer Einschalttemperatur (Tein) am ersten Temperaturfühler (13) den Verdichter einzuschalten (S2) und bei Eintritt einer ersten Ausschaltbedingung wieder auszuschalten (S4), sowie den Verdichter (7) einzuschalten (S7), wenn seit dem letztmaligen Betrieb des Verdichters (S2-S4; S7-S9) eine vorgegebene Wartezeit (twmax; twmin) verstrichen ist,und den aufgrund von Überschreitung der Wartezeit (twmax; twmin) eingeschalteten Verdichter (7) bei Eintritt einer zweiten Ausschaltbedingung (S9) wieder auszuschalten, die von der ersten Ausschaltbedingung verschieden ist, **dadurch gekennzeichnet, dass** diese zweite Ausschaltbedingung (59) so gewählt ist, dass ihr Eintritt früher erfolgt als der Eintritt der ersten Ausschaltbedingung.

2. Kältegerät nach Anspruch 1, **dadurch gekennzeichnet, dass** die vorgegebene Wartezeit (twmax; twmin) abhängig davon ist, ob die erste oder die zweite Ausschaltbedingung (S3; S8) zum Ausschalten (S4; S9) des Verdichters (7) geführt hat.

3. Kältegerät nach Anspruch 2, **dadurch gekennzeichnet, dass** die Wartezeit (twmin) im Falle der zweiten Ausschaltbedingung (S8) kürzer ist als die Wartezeit (twmax) im Falle der ersten Ausschaltbedingung (S3).

4. Kältegerät nach einem der vorhergehenden Ansprüche, **dadurch gekennzeichnet, dass** wenigstens eine der Ausschaltbedingungen das Verstreichen einer vorgegebenen Zeitspanne seit dem Einschalten (S2; S7) ist.

5. Kältegerät nach Anspruch 4, **dadurch gekennzeichnet, dass** beide Ausschaltbedingungen das Verstreichen einer vorgegebenen Zeitspanne seit dem Einschalten sind, wobei die vorgegebene Zeitspanne im Falle der zweiten Ausschaltbedingung kürzer ist als im Falle der ersten Ausschaltbedingung.

6. Kältegerät nach einem der Ansprüche 1 bis 4, **dadurch gekennzeichnet, dass** die erste Ausschaltbedingung (S3) das Unterschreiten einer Ausschalttemperatur (Taus) am ersten Temperaturfühler (13) ist.

7. Kältegerät nach Anspruch 4 oder 5 oder nach Anspruch 6, soweit auf Anspruch 4 rückbezogen, **dadurch gekennzeichnet, dass** die vorgegebene Zeitspanne im.Falle der zweiten Ausschaltbedingung kürzer ist als die Zeit, die der Verdichter (7) zum Austausch des Inhalts der beiden Verdampfer (2, 3) benötigt.

8. Kältegerät nach Anspruch 7, **dadurch gekennzeichnet, dass** die die vorgegebene Zeitspanne im Falle der zweiten Ausschaltbedingung kürzer ist als das Eineinhalbfache der Zeit, die der Verdichter (7) zum Austausch des Inhalts des stromaufwärtigen (2) der beiden Verdampfer benötigt.

9. Kältegerät nach Anspruch 1, 2, oder 3, **dadurch gekennzeichnet, dass** ein zweiter Temperaturfühler (12) an einem der Verdampfer (6) angeordnet ist und die zweite Ausschaltbedingung (S7) eine Temperaturabnahme oder die Unterschreitung einer Grenztemperatur an dem zweiten Temperaturfühler (12) ist.

10. Kältegerät nach Anspruch 9, **dadurch gekennzeichnet, dass** der zweite Temperaturfühler (12) am stromabwärtigen Verdampfer (6), insbesondere in einer stromaufwärtigen Region des stromabwärtigen Verdampfers (6), angeordnet ist.

11. Kältegerät nach einem der Ansprüche 1 bis 10, **dadurch gekennzeichnet, dass** das Einschalten des Verdichters (7) nach einer vorgegebenen Wartezeit (twmax; twmin) nur dann erfolgt, wenn die Temperatur am ersten Temperaturfühler (13) zwischen der Einschalttemperatur (Tein) und einer Ausschalttemperatur (Taus) liegt.

## Claims

1. Refrigerator, in particular domestic refrigerator, having at least two different temperature zones (2, 3) cooled by evaporators (5, 6) connected in series with a compressor (7), a first temperature sensor (13) arranged on the temperature zone (3) cooled by the downstream evaporator (6), and a control circuit (11) which is connected to the temperature sensor (13) and is set up to switch on (S2) the compressor when a switch-on temperature (Tein) is exceeded on the first temperature sensor (13) and to switch it off again (S4) when a first switch-off condition occurs, and to switch on (S7) the compressor (7) if a predetermined waiting time (twmax; twmin) has elapsed since the last operation of the compressor (S2-S4; S7-S9) and again to switch off the compressor (7) which was switched on due to exceeding the waiting time (twmax; twmin) when a second switch-off condition (S9) occurs, which differs from the first switch-off condition, **characterised in that** this second switch-off condition (S9) is selected such that it occurs earlier than the first switch-off condition.

2. Refrigerator according to claim 1, **characterised in that** the predetermined waiting time (twmax; twmin) is dependent on whether the first or the second switch-off condition (S3; S8) has resulted in the compressor (7) switching off (S4; S9).

3. Refrigerator according to claim 2, **characterised in that** the waiting time (twmin) in the case of the second switch-off condition (S8) is shorter than the waiting time (twmax) in the case of the first switch-off condition (S3).

4. Refrigerator according to one of the preceding claims, **characterised in that** at least one of the switch-off conditions is the elapsing of a predetermined time interval since the switch-on (S2; S7).

5. Refrigerator according to claim 4, **characterised in that** both switch-off conditions are the elapsing of a predetermined time interval since the switch-on, wherein the predetermined time interval in the case of the second switch-off condition is shorter than in the case of the first switch-off condition.

6. Refrigerator according to one of claims 1 to 4, **characterised in that** the first switch-off condition (S3) is the failure to reach a switch-off temperature (Taus) on the first temperature sensor (13).

7. Refrigerator according to claim 4 or 5 or according to claim 6, insofar as it relates back to claim 4, **characterised in that** the predetermined time interval in the case of the second switch-off condition is shorter than the time which the compressor (7) requires to replace the contents of the two evaporators (2, 3).

8. Refrigerator according to claim 7, **characterised in that** the predetermined time interval in the case of the second switch-off condition is shorter than one and half times the time that the compressor (7) requires to replace the contents of the upstream evaporator (2) of the two evaporators.

9. Refrigerator according to claim 1, 2 or 3, **characterised in that** a second temperature sensor (12) is arranged on one of the evaporators (6) and the second switch-off condition (S7) is a temperature drop or the failure to reach a limit temperature on the second temperature sensor (12).

10. Refrigerator according to claim 9, **characterised in that** the second temperature sensor (12) is arranged on the downstream evaporator (6), in particular in an upstream region of the downstream evaporator (6).

11. Refrigerator according to one of claims 1 to 10, **characterised in that** the switching-on of the compressor (7) only then occurs after a predetermined waiting time (twmax; twmin) if the temperature on the first temperature sensor (13) lies between the switch-on temperature (Tein) and a switch-off temperature (Taus).

## Revendications

1. Appareil frigorifique, notamment appareil frigorifique à usage domestique, comprenant au moins deux zones de température (2, 3) différentes, réfrigérées par des évaporateurs (5, 6) raccordés en série avec un compresseur (7), comprenant une première sonde de température (13) disposée sur la zone de température (3) réfrigérée par l'évaporateur (6) situé en aval, et comprenant un circuit de commande (11) qui est raccordé à la sonde de température (13) et est configuré pour mettre en fonction (S2) le compresseur lors du dépassement d'une température de mise en fonction (Tein) sur la première sonde de température (13) et pour le mettre de nouveau hors fonction (S4) à l'apparition d'une première condition de mise hors fonction, ainsi que pour mettre le compresseur (7) en fonction (S7) lorsqu'un temps d'attente prédéfini (twmax ; twmin) est écoulé depuis le dernier fonctionnement du compresseur (S2 - S4 ; S7 - S9), et pour mettre le compresseur (7) mis en fonction en raison du dépassement du temps d'attente (twmax ; twmin) de nouveau hors fonction à l'apparition d'une deuxième condition de mise hors fonction (S9) qui est différente de la première condition de mise hors fonction, **caractérisé en ce que** cette deuxième condition de mise hors fonction (S9) est sélectionnée de manière à ce que son apparition ait lieu plus tôt que l'apparition de la première condition de mise hors fonction.

2. Appareil frigorifique selon la revendication 1, **caractérisé en ce que** le temps d'attente prédéfini (twmax ; twmin) dépend du fait si la première ou la deuxième condition de mise hors fonction (S3 ; S8) a entraîné la mise hors fonction (S4 ; S9) du compresseur (7).

3. Appareil frigorifique selon la revendication 2, **caractérisé en ce que** le temps d'attente (twmin), dans le cas de la deuxième condition de mise hors fonction (S8), est plus court que le temps d'attente (twmax) dans le cas de la première condition de mise hors fonction (S3).

4. Appareil frigorifique selon l'une quelconque des revendications précédentes, **caractérisé en ce qu'**au moins une des conditions de mise hors fonction est l'écoulement d'un laps de temps prédéfini depuis la mise en fonction (S2 ; S7).

5. Appareil frigorifique selon la revendication 4, **caractérisé en ce que** les deux conditions de mise hors fonction sont l'écoulement d'un laps de temps prédéfini depuis la mise en fonction, le laps de temps prédéfini dans le cas de la deuxième condition de mise hors fonction étant plus court que dans le cas de la première condition de mise hors fonction.

6. Appareil frigorifique selon l'une quelconque des revendications 1 à 4, **caractérisé en ce que** la première condition de mise hors fonction (S3) est le dépassement vers le bas sur la première sonde de température (13) d'une température de mise hors fonction (Taus).

7. Appareil frigorifique selon la revendication 4 ou 5 ou selon la revendication 6, dans la mesure où elle fait renvoi à la revendication 4, **caractérisé en ce que** le laps de temps prédéfini dans le cas de la deuxième condition de mise hors fonction est plus court que le temps que le compresseur (7) nécessite pour échanger le contenu des deux évaporateurs (2, 3).

8. Appareil frigorifique selon la revendication 7, **caractérisé en ce que** le laps de temps prédéfini dans le cas de la deuxième condition de mise hors fonction est plus court que l'une fois et demi du temps que le compresseur (7) nécessite pour échanger le contenu de l'évaporateur, situé en amont (2), des deux évaporateurs.

9. Appareil frigorifique selon la revendication 1, 2 ou 3, **caractérisé en ce qu'**une deuxième sonde de température (12) est disposée sur l'un des évaporateurs (6) et **en ce que** la deuxième condition de mise hors fonction (S7) est une baisse de température ou le dépassement vers le bas d'une température limite sur la deuxième sonde de température (12).

10. Appareil frigorifique selon la revendication 9, **caractérisé en ce que** la deuxième sonde de température (12) est disposée sur l'évaporateur (6) situé en aval, notamment dans une région en amont de l'évaporateur (6) situé en aval.

11. Appareil frigorifique selon l'une quelconque des revendications 1 à 10, **caractérisé en ce que** la mise en fonction du compresseur (7) après un temps d'attente prédéfini (twmax ; twmin) est réalisée seulement lorsque la température sur la première sonde de température (13) est située entre la température de mise en fonction (Tein) et une température de mise hors fonction (Taus).
